# EUROPEAN PATENT SPECIFICATION

(11) **EP 2 470 026 B1**
(45) Date of publication and mention of the grant of the patent: **17.12.2014**
(21) Application number: 10747529.5
(22) Date of filing: 24.08.2010
(51) Int. Cl.: A21D 8/06, A21D 8/08, A23L 1/01, A21D 13/00

(54) **READY-TO-EAT FARINACEOUS PRODUCT AND A METHOD FOR THE PREPARATION THEREOF**
STÄRKEHALTIGES FERTIGLEBENSMITTELPRODUKT UND VERFAHREN ZU DESSEN HERSTELLUNG
PRODUIT À BASE DE FARINE PRÊT À CONSOMMER ET SON PROCÉDÉ DE PRÉPARATION

(30) Priority: 25.08.2009 EP 09168591
(43) Date of publication of application: 04.07.2012
(73) Proprietor: Bakery Supplies Europe Holding B.V., 1112 XE Diemen (NL)
(72) Inventor: SCHMIDT, Kerstin, 28357 Bremen (DE); CLARKE, Stephen John, Wales CH72AS (GB); MORET, Pieter, NL-4421 ML Kapelle (NL)
(74) Representative: Nederlandsch Octrooibureau
(86) International application number: PCT/NL2010/050528
(87) International publication number: WO 2011/025370

(56) References cited:
- EP-A1- 1 832 172
- WO-A1-2009/021553
- US-A- 3 633 490
- US-A- 3 694 228
- US-A1- 2004 096 545

## Description

### TECHNICAL BACKGROUND OF THE INVENTION

The present invention relates to a ready-to-eat farinaceous product and to a method of preparing such a ready-to-eat farinaceous product.

The ready-to-eat food product of the present invention comprises a body of baked farinaceous dough, 40-70% of the surface area of said body of baked dough being coated with a layer of edible material, wherein the surface of the baked dough body that is not coated with the layer of edible material is fried and wherein at least 70 wt.% of the surface of the baked dough body that is covered with the layer of edible material is non-fried. An example of a ready-to-eat farinaceous product according to the present invention is a reduced fat, glazed doughnut.

The invention further provides a method of preparing a ready-to-eat farinaceous food product, said method comprising the successive steps of:
- preparing a farinaceous dough;
- dividing the dough into one or more portions;
- shaping the one or more dough portions;
- contacting 30-70% of the total surface area of the one or more shaped dough pieces with hot oil to produce one or more partially fried dough pieces comprising a fried surface area and a non-fried surface area; and
- baking said one or more partially fried dough pieces to produce one or more baked dough pieces;
wherein a layer of edible material is applied to 40-70% of the surface area of the shaped dough pieces, the partially fried dough pieces or the baked dough pieces and wherein the surface area of the final ready-to-eat product that is not covered by the layer of edible material is fried surface area.

### BACKGROUND OF THE INVENTION

Ready-to-eat farinaceous products can be prepared using a variety of heat treatment methods, including oven baking, frying, infrared radiation, hot air impingement, superheated steam etc. Each of these heating techniques has its advantages and its drawbacks.

The preparation of fully cooked farinaceous products by means of frying yields fried products having a browned, crispy crust. Furthermore, fried products have a very distinct pleasant taste that is not found in ready-to-eat farinaceous products that have been prepared by means of other heating techniques. Doughnuts are a typical example of a fried farinaceous product.

An important drawback of fried farinaceous products resides in the high fat content of these products and the fact that these fats usually contain high levels of saturated fatty acids. Thus, from a nutritional perspective it is highly desirable to reduce the fat levels in these fried farinaceous products. This problem is well recognized in the prior art. Hence, it is not surprising that the prior art provides preparation methods that aim to yield ready-to-eat farinaceous products that are indistinguishable from fried products, except for the fact that they contain significantly less fat.

US 5,910,264, for instance, describes a domestic, electrical cooking apparatus for cooking precooked, deep-frozen or fresh feed, of the fryer type, with no oil bath and no preheating, said apparatus comprising a removable rotary basket heated by infrared radiation. In the US patent it is observed that the fact that the apparatus is heated by infrared rays makes it possible to cook, without an oil bath, commercial precooked deep-frozen food, such as chips, doughnuts, pommes dauphines etc., or fresh or uncooked food, such as chips, chestnuts, spring rolls, etc., without any drawbacks and any risks, in a hygienic and dietetic manner.

A drawback of the apparatus described in US 5,910,264 resides in the fact that the sensory properties of the crust of the cooked products prepared in such apparatus are sub-optimal. More particularly, both appearance and taste of the crust of these cooked products tend to be inferior to that of their fried counterparts.

Hence, there remains a need for a method that can suitably be used to prepare ready-to-eat farinaceous products with sensory properties that are comparable to those of fried products, but containing less fat than their fried counterparts.

### SUMMARY OF THE INVENTION

The present inventors have designed a process that meets the aforementioned need. The invention provides a method of preparing a ready-to-eat farinaceous food product, said method comprising the successive steps of:
a) preparing a farinaceous dough by mixing flour, water and optionally one or more other bakery ingredients;
b) dividing the dough into one or more dough portions;
c) shaping the one or more dough portions into one or more shaped dough pieces;
d) proving the dough pieces;
e) contacting 30-60% of the total surface area of the one or more shaped dough pieces with hot oil during a period of at least 10 seconds to produce one or more partially fried dough pieces comprising a fried surface area and a non-fried surface area; and
f) baking said one or more partially fried dough pieces to produce one or more baked dough pieces;
wherein a layer of edible material is applied to 40-70% of the surface area of the shaped dough pieces, the partially fried dough pieces or the baked dough pieces and wherein the surface area of the final ready-to-eat product that is not covered by the layer of edible material is fried surface area.

The present method uses hot oil for selectively frying the part of the surface of the ready-to-eat product that is not (to be) covered by a layer of edible material. By not frying the part of the surface that is covered by a layer of edible material fat uptake as a result of frying can be minimized. Since fried surface features such as crispiness and browning are barely perceivable by a consumer when a fried surface is covered with a layer of edible material, the present method offers the advantage that it can achieve a significant reduction in fat uptake during preparation of the ready-to-eat farinaceous product without introducing a perceptible adverse effect on product quality. In the present method the partially fried product is subjected to a baking treatment in order to obtain a fully cooked ready-to-eat product. During the baking also the parts of the dough that are still uncooked become fully cooked. Thus, the present method enables the preparation of, for instance, ready-to-eat glazed doughnuts having a substantially reduced fat content.

Another aspect of the invention relates to ready-to-eat food product comprising a body of baked farinaceous dough, 40-70% of the surface area of said body of baked dough being coated with a layer of edible material, wherein the surface of the baked dough body that is not coated with the layer of edible material is fried surface area and wherein at least 70 wt.% of the surface of the baked dough body that is covered with the layer of edible material is non-fried.

### DETAILED DESCRIPTION OF THE INVENTION

Accordingly, the present invention relates to a method of preparing a ready-to-eat farinaceous food product, said method comprising the successive steps of:
a) preparing a farinaceous dough by mixing flour, water and optionally one or more other bakery ingredients;
b) dividing the dough into one or more dough portions;
c) shaping the one or more dough portions into one or more shaped dough pieces;
d) proving the dough pieces
e) contacting 30-70% of the total surface area of the one or more shaped dough pieces with hot oil during a period of at least 10 seconds to produce one or more partially fried dough pieces comprising a fried surface area and a non-fried surface area; and
f) baking said one or more partially fried dough pieces to produce one or more baked dough pieces;
wherein a layer of edible material is applied to 40-70% of the surface area of the shaped dough pieces, the partially fried dough pieces or the baked dough pieces and wherein the surface area of the final ready-to-eat product that is not covered by the layer of edible material is fried surface area.

Throughout this document the terms "oil" and "fat" are used interchangeably and encompass triglycerides, diglycerides, monoglycerides, phospholipids and combinations thereof

The term "baking" as used herein refers to the prolonged cooking of the partially fried dough pieces by dry heat, as opposed to e.g. boiling or frying. It should be understood that the term "baking" encompasses the contacting of the partially fried dough pieces with superheated steam as well as the exposure of said dough pieces to hot air impingement or infrared radiation.

The terminology "fried surface area" as used herein refers to the surface area of the shaped dough pieces that has been contacted with hot oil during a period of at least 10 seconds. The contacting with hot oil can be achieved in many different ways, e.g. by immersing part of the shaped dough pieces in hot oil, by spraying the shaped dough pieces with hot oil or by placing the shaped dough pieces onto a hot layer of oil (shallow frying).

In the present method 30-70% of the total surface area of the one or more shaped dough pieces is contacted with hot oil during a period of at least 10 seconds, thereby producing one or more partially fried dough pieces comprising a fried surface area representing 30-70% of the total surface area and the remainder of the total surface area being non-fried surface area.

The hot oil that is employed in the present method to partially fry the shaped dough pieces typically has a temperature of at least 160 °C. Preferably, the hot oil has a temperature of 170-350 °C, most preferably of 180-300 °C. Contact time between the shaped dough pieces and the hot oil is advantageously within the range of 10-180 seconds, most preferably within the range of 10-60 seconds.

In the present method the shaped dough pieces can be contacted with the hot oil in different manners, e.g. by dipping or by partially immersing the shaped dough pieces in hot oil; or by spraying the shaped dough pieces with hot oil.

The benefits of the present invention in terms of fat reduction are most pronounced if only a limited part of the total surface area of the shaped dough pieces is contacted with the hot oil. Preferably, not more than 60%, more preferably not more than 55% of the total surface area of the one or more shaped dough pieces is contacted with the hot oil during the contacting with the hot oil. Typically, at least 35%, most preferably at least 40% of the total surface area of the one or more shaped dough pieces is contacted with the hot oil.

Likewise, it is preferred that only a minor portion of the fried surface area is covered by the layer of edible material. More particularly, the fried surface area that is covered by the layer of edible material represents less than 30%, most preferably less than 20% of the total surface area. Expressed differently, the fried surface area that is covered by the layer of edible material preferably represents less than 40%, more preferably less than 30% of the total fried surface area.
The inventors have discovered that the fat content of the ready-to-eat product can be reduced even further by frying the upside of the proved dough pieces, i.e. the side of the dough pieces that represented the upside, as opposed to the bottom side, of the dough pieces during at least 70%, most preferably at least 90% of the proving process. Although the inventors do not wish to be bound by theory, it is believed that during proving less and/or smaller gas cells are formed in the exterior layer of the dough pieces that is located at the upside than in the same layer on the bottom side. Probably, because the carbon dioxide that is formed during proving can diffuse out of the dough pieces more easily at the upside than the bottom side where it is in contact with e.g. a moving belt. Due to the fact that the upside of the proved dough contains less (or smaller) gas cells than the bottom side, the oil uptake through the upside tends to be substantially lower than through the bottom side.

Accordingly, in a particularly preferred embodiment of the present invention, at least 60% of the upside and less than 30% of the bottom side of the proved dough pieces is contacted with the hot oil.

The edible material that is applied as a layer in the present method can suitably be a solid mass, a powder, a liquid or a paste. In case the edible material is a solid mass (e.g. chocolate) it is preferred to apply this solid mass in liquefied form (e.g. in molten form). In accordance with a particularly preferred embodiment, the layer of edible material is applied in the form of a powder, a liquid or a paste. Most preferably, the layer of edible material is applied in the form of a liquid or a paste. In case the edible material is applied as a liquid, it is advantageous to employ a viscous liquid, a gel-forming liquid or a molten liquid in order to avoid that the liquid runs off the farinaceous product. It should be understood that the present invention encompasses a method wherein a first layer of edible material is applied as a liquid or a paste, following which solid edible material is deposited onto the first layer, e.g. by sprinkling an edible powder onto said first layer.

The layer of edible material may be applied to the shaped dough pieces, to the partially fried dough pieces or to the baked dough pieces. Preferably, the layer of edible material is applied after the partial frying of the shaped dough pieces, i.e.to the partially fried dough pieces or the baked dough pieces. Most preferably, the layer of edible material is applied to the baked dough pieces.

The layer of edible material can comprise a wide variety of food materials. Advantageously, the layer of edible material contains at least 50 wt.% of an edible material selected from chocolate, fruit preparation, custard, glaze, sugar, fat, cocoa, milk protein, egg yolk, egg white and combinations thereof Examples of ready-to-eat farinaceous products that can suitably be prepared by the present method include doughnuts, lardy cakes, Spritzkuchen, Krapfen, churros, 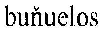 and xuxos. Most preferably, the ready-to-eat product is a doughnut.

In the present method, the partial frying of the shaped dough pieces causes the surface that has been contacted with the hot oil to become more firm as a result of e.g. starch gelation. Thus, the contacting with the hot oil can advantageously be used to set the shape of the shaped dough pieces prior to baking, thereby avoiding loss of shape during the baking. According to a particularly advantageous embodiment of the present method (i) the one or more dough portions are shaped into shaped dough pieces having a rounded bottom; (ii) the fried surface area includes the surface area of the rounded bottom; and (iii) during baking the one or more partially fried dough pieces rest on the rounded bottom part. This particular embodiment of the invention offers the advantage that the rounded shape of the dough pieces is not lost as a result of sagging.

As explained herein the present method can employ a variety of baking techniques. In accordance with a preferred embodiment of the present invention the partially fried dough pieces are baked by subjecting the dough pieces to one or more of the following heat treatments:
- holding said dough pieces in an oven having an oven temperature of at least 150 °C for 2 minutes;
- contacting said dough pieces to superheated steam,
- exposing said dough pieces to hot air impingement;
- exposing said dough pieces to infrared radiation having a wavelength in the range of 0.7-10 µm.

The terms "superheated steam" as used herein refers to steam having a (static) pressure that is below the saturated vapour pressure of said steam. The saturated vapour pressure of steam varies with temperature. The higher the temperature, the higher the saturated vapour pressure. Because the pressure of the superheated steam employed in the present method is lower than the saturated vapour pressure, the steam is capable of drying, that is, vaporising the water out of the partially fried dough pieces with which the superheated steam flow is contacted.

The term "infrared radiation" as used herein refers to electromagnetic radiation having a wavelength of 0.7 µm to 1 mm. Whenever reference is made herein to infrared radiation having a wavelength within a certain range, what is meant is that more than 50%, preferably more than 80% of the energy content of the infrared radiation stems from infrared radiation having a wavelength within said range.

The term "air" as used in relation to impingement with hot air should not be construed narrowly, as impingement with gases or gas mixtures other than air may produce similar results. Preferably, the hot air employed in the present method contains at least 50 wt.% of air. Most preferably, the hot air employed consists of air.

If the partially fried dough pieces are baked in an oven, advantageously an oven temperature in the range of 150-350 °C, most preferably in the range of 180-320 °C is used. Typically, the partially fried dough pieces will be held in an oven at the indicated oven temperature for a period of 1-15 minutes, most preferably for 3-8 minutes.

The temperature of the superheated steam employed in the present process can vary within a broad range. In order to obtain a ready-to-eat foodstuff with a slightly browned skin and a fully cooked interior an adequate combination of steam temperature and contact time should be chosen. Generally speaking, the higher the steam temperature, the shorter the contact time. Preferably, the superheated steam employed in the present method has a temperature in the range of 130-280 °C, most preferably of 150-250 °C. The partially fried dough pieces are suitably contacted with the superheated steam for at least 30 seconds, more preferably for 75-150 seconds.

The partially fried dough pieces are advantageously contacted with superheated steam having a pressure that is substantially below its saturated vapour pressure. According to a particularly preferred embodiment, the superheated steam has a pressure of 0.15 to 0.95 times, preferably of 0.3 to 0.8 times the water vapour pressure of the superheated steam.

The contacting of the partially fried dough pieces with the superheated steam is suitably achieved by passing a steady flow of superheated steam over the partially fried dough pieces. In order to ensure that the cooking process will proceed at an adequate rate it is preferred to pass superheated steam over the dough pieces at a flow rate of at least 1 m/s, preferably of at least 3 m/s. Usually, the flow rate does not exceed 50 m/s, preferably it does not exceed 30 m/s.

Direct contact between the superheated steam and the partially fried dough pieces is required to achieve the desired product characteristics. Direct contact is particularly relevant for achieving adequate surface browning and moisture reduction. Hence, if the dough pieces are contacted with the superheated steam while being placed on a tray or being held in a basket, it is essential that superheated steam can penetrate through such a tray or basket to reach the surface of the dough pieces. Typically, in the present method at least 80%, preferably at least 90% of the surface of the partially fried dough pieces is exposed directly to the superheated steam.

In the present method the infrared radiation can suitably be provided by any type of infrared heater that is capable of producing infrared radiation with the right wavelength. The latter wavelength is dependent on the temperature of the emitting body. Most commercially available infrared heaters employ a flame or an electrically heated filament as the emitting body. The present method advantageously employs a infrared heater that contains an electrically heated filament as the emitting body. This filament may be protected by a heat-resistant quartz glass tube. Furthermore, said quartz tube may be filled with inert gas to prevent filament degradation. In the present method the infrared radiation is advantageously provided by infrared tube heaters.

The present method preferably employs infrared radiation having a very high energy content. Consequently, in a particularly preferred embodiment, the infrared radiation employed has a wavelength of 0.7-5.0 µm.

Preferably, in the present method the infrared radiation to which the partially fried dough pieces are exposed has a high power density. Advantageously, the partially fried dough pieces are exposed to a heat flux of at least 2 kW/m², more preferably of at least 5 kW/m² and most preferably of 8-80 kW/m² for at least 20 seconds. Advantageously, the total time period during which the partially fried dough pieces are exposed to the aforementioned heat flux is at least 40 seconds, more preferably at least 60 seconds and most preferably at least 90 seconds. Typically, the time period during which the portions are exposed to the earlier mentioned heat flux does not exceed 700 seconds. Preferably, said time period does not exceed 500 seconds.

Also the hot air impingement employed in the present method advantageously is used to achieve a very intense heat transfer into the partially fried dough pieces. Accordingly, the portions are preferably exposed to impingement with hot air having a temperature of 180-340 °C, more preferably of 200-320 °C.

The effectiveness of the impingement with hot air depends on the temperature of the hot air, but also on the flow rate of said hot air. Advantageously, the impingement with hot air comprises impinging the portions with hot air having a velocity of at least 1 m/s, preferably of 5-20 m/s.

The baked dough pieces obtained in the present method immediately after the baking typically have a core temperature of at least 85 °C, more preferably of at least 90°C and most preferably of at least 95 °C.

The present method is particularly suitable for preparing ready-to-eat products that have been leavened with the help of yeast and/or a chemical leavening agent prior to the contacting with the hot oil. Advantageously the leavened shaped dough pieces have a specific volume of at least 1.2 ml/g, more preferably of at least 2.0 ml/g before they are contacted with the hot oil.

As explained herein before, the present method offers the advantage that it enables the preparation of ready-to-eat farinaceous products having a reduced fat content. Accordingly, it is preferred to employ a dough that has a relatively low fat content. Preferably, the dough employed contains less than 10% fat by weight of flour. Even more preferably, the dough contain 0 -7 % fat by weight of flour.

Typically, the dough employed in the present method contains 40-60% of water by weight of flour and 0-50% of other bakery ingredients by weight of flour.

Another aspect of the invention relates to a ready-to-eat food product comprising a body of baked farinaceous dough, 40-70% of the surface area of said body of baked dough being coated with a layer of edible material, wherein the surface of the baked dough body that is not coated with the layer of edible material is fried surface area and wherein at least 70 wt.% of the surface of the baked dough body that is covered with the layer of edible material is non-fried. Such ready-to-eat food product may suitably be prepared by a method as defined herein before.

According to a particularly preferred embodiment, the baked dough body has a fat content of 1-15 wt.%, more preferably of 2-10 wt.%.

Typically, the baked dough body has a weight of 10-200 g and the layer of edible material has a weight of 2-40 g. More preferably, the baked dough body has a weight of 20-100 g and the layer of edible material has a weight of 4-20 g.

The layer of edible material preferably contains at least 50 wt.% of an edible material selected from chocolate, fruit prep, custard, glaze, sugar, fat, cocoa, milk protein, egg white, egg yolk and combinations thereof. The layer of edible material preferably is a continuous layer, i.e. a layer that does not comprise holes showing the underlying baked (non-fried) dough body.

The ready-to-eat farinaceous product is preferably selected from the group consisting of doughnuts, fried noodles, lardy cakes, Spritzkuchen, Krapfen, churros, 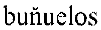 and xuxos. Most preferably, the ready-to-eat product is a doughnut.

The invention is further illustrated by means of the following, non-limiting examples.

### EXAMPLES

### Example 1

Ring doughnuts (41 grams) were prepared using the following recipe:

| | Wt.% |
|---|---|
| Flour | 55.9 |
| Water | 29.6 |
| Doughnut concentrate | 8.1 |
| Fat | 3.9 |
| Yeast | 2.5 |

Dough was made in a spiral mixer by mixing the ingredient for 2 minutes at slow and 6 minutes at fast speed. After 10 minutes rest at room temperature the dough was laminated and rings were cut. The rings were rested/stored at 5°C till further use.

The doughnut rings were put in a proving cabinet and proved at 38°C, 60 %RH, for 54 minutes. The proved products were fried on 1 side, for 20 seconds in oil with a temperature of 190°C. Products were than transferred into a small super heated steam unit where they were baked at 200°C for 75 seconds in superheated steam at a heat transfer coefficient of 55-70 W/m².°C till a core temperature of 96°C. After cooling down for 1hour at room temperature, the non-fried surface area of the products was decorated with a decoration of the following formulation:

| | Wt% |
|---|---|
| Shortening | 19.1 |
| Whey powder | 2.7 |
| Cocoa powder | 3.6 |
| Water | 10.5 |
| Thickener | 2.0 |
| Fondant | 62.1 |

In terms of appearance and eating quality the fully cooked doughnuts so obtained were essentially indistinguishable from ordinary fully fried doughnuts. The fat content of the fully cooked doughnuts (decoration excluded) was about 7 wt.%

### Comparative Example A

Proved ring doughnuts (41 grams) were prepared using the recipe and procedure described in Example 1. The proved products were fried on both sides, for 75 seconds in oil with a temperature of 180°C.

After cooling down for 1hour at room temperature, the products were decorated in the same way as described in Example 1.

Appearance and eating quality of the so obtained doughnuts were typical for ordinary fully fried doughnuts. The ready-to-eat doughnuts had a fat content (decoration excluded) of about 23 wt.%.

### Comparative Example B

Proved ring doughnuts (41 grams) were prepared using the recipe and procedure described in Example 1.

The proved products were than transferred into a small super heated steam unit where they were baked at 200°C for 115 seconds in superheated steam and an heat transfer coefficient of 55-70 W/m².°C till a core temperature of 96°C. After cooling down for 1hour at room temperature, the products were decorated in the same way as described in Example 1.

The appearance and eating quality of the fully cooked doughnuts so obtained were inferior to those of the fully cooked doughnuts described in Examples 2 and 1. The fat content of these doughnuts (decoration excluded) was about 5 wt.%

### Example 2

Proved ring doughnuts (41 grams) were prepared using the recipe and procedure described in Example 1.

The proved products were fried on 1 side, for 20 seconds in oil with a temperature of 190°C and subsequently transferred into a travelling infrared oven that had additionally been equipped with hot air impingement nozzles. The oven consisted of a moving wire mesh belt the speed of which could be controlled. The infrared heating lamps and the hot air impingement nozzles were mounted above the moving belt. Half way along the belt there was a switchback, which effectively flipped the doughnuts. The heating elements consisted of six sets of two lamps mounted at adjustable angles, each set of which could be adjusted in intensity. The sets of lamps were evenly distributed across the length of the moving belt. In addition two hot air impingement nozzles were mounted, one near the centre of the belt and one near the end, so that each side of the doughnuts was exposed to the hot air directly. The temperature of the hot air was adjustable.

Lamp intensities and impingement temperatures depicted in Table I (zone 1 representing the first and zone 8 representing the last zone of the oven that the belt passes through) were applied. The residence time within the oven was 3 minutes.

**Table I**

| **Zone 1 %** | **Zone 2 %** | **Zone 3 %** | **Zone 4 Imp. Temp** | **Zone 5 %** | **Zone 6 %** | **Zone 7 %** | **Zone 8 Imp. Temp** |
|---|---|---|---|---|---|---|---|
| 75 | 20 | 0 | 250 °C | 25 | 15 | 0 | 250 °C |

After cooling down for 1 hour at room temperature, the non-fried surface area of the products was decorated in the same way as described in Example 1.

In terms of appearance and eating quality the fully cooked doughnuts so obtained were essentially indistinguishable from ordinary fully fried doughnuts. The fat content of the fully cooked doughnuts (decoration excluded) was about 7 wt.%

## Claims

1. A method of preparing a ready-to-eat farinaceous food product, said method comprising the successive steps of:
a) preparing a farinaceous dough by mixing flour, water and optionally one or more other bakery ingredients;
b) dividing the dough into one or more dough portions;
c) shaping the one or more dough portions into one or more shaped dough pieces;
d) contacting 30-70% of the total surface area of the one or more shaped dough pieces with hot oil during a period of at least 10 seconds to produce one or more partially fried dough pieces comprising a fried surface area and a non-fried surface area; and
e) baking said one or more partially fried dough pieces to produce one or more baked dough pieces;
wherein a layer of edible material is applied to 40-70% of the surface area of the shaped dough pieces, the partially fried dough pieces or the baked dough pieces and wherein the surface area of the final ready-to-eat product that is not covered by the layer of edible material is fried surface area.

2. Method according to claim 1, wherein the partially fried dough pieces are baked by subjecting the dough pieces to one or more of the following heat treatments:
• holding said dough pieces in an oven having an oven temperature of at least 150 °C for 2 minutes;
• contacting said dough pieces to superheated steam,
• exposing said dough pieces to hot air impingement;
• exposing said dough pieces to infrared radiation having a wavelength in the range of 0.7-10 µm.

3. Method according to claim 1 or 2, wherein the hot oil has a temperature of at least 160 °C, preferably of 170-350 °C.

4. Method according to any on of the preceding claims, wherein not more than 60% of the total surface area of the one or more shaped dough pieces is contacted with the hot oil during a period of at least 10 seconds.

5. Method according to any one of the preceding claims, wherein the layer of edible material is applied in the form of a powder, a liquid or a paste.

6. Method according to any one of the preceding claims, wherein the layer of edible material contains at least 50 wt.% of an edible material selected from chocolate, fruit prep, custard, glaze, sugar, fat, cocoa, milk protein, egg white, egg yolk and combinations thereof.

7. Method according to any one of the preceding claims, wherein the ready-to-eat farinaceous product is a doughnut.

8. Method according to any one of the preceding claims, wherein the fried surface area that is covered by the layer of edible material represents less than 30%, preferably less than 20% of the total surface area.

9. Method according to any one of the preceding claims, wherein (i) the one or more dough portions are shaped into shaped dough pieces having a rounded bottom; (ii) the fried surface area includes the surface area of the rounded bottom; and (iii) during baking the one or more partially fried dough pieces rest on the rounded bottom part.

10. A ready-to-eat food product comprising a body of baked farinaceous dough, 40-70% of the surface area of said body of baked dough being coated with a layer of edible material, wherein the surface of the baked dough body that is not coated with the layer of edible material is fried surface area and wherein at least 70 wt.% of the surface of the baked dough body that is covered with the layer of edible material is non-fried.

11. Ready-to-eat food product according to claim 10, wherein the baked dough body has a fat content of 2-15 wt.%.

12. Read-to-eat food product according to claim 10 or 11, wherein the baked dough body has a weight of 10-200 g and the layer of edible material has a weight of 2-40 g.

13. Ready-to-eat food product according to any one of claims 10-12, wherein the food product is a doughnut.

14. Ready-to-eat food product according to any one of claims 10-13, wherein the layer of edible material is a continuous layer.

15. Ready-to-eat food product according to any one of claims 10-14, wherein the layer of edible material comprises at least 50 wt.% of an edible material selected from chocolate, fruit prep, custard, glaze, fat, cocoa, milk protein, egg white, egg yolk and combinations thereof.

## Patentansprüche

1. Verfahren zur Herstellung eines stärkehaltigen Fertiglebensmittelprodukts, wobei das Verfahren die aufeinander folgenden Schritte aufweist:
a) Herstellen eines stärkehaltigen Teiges durch Mischen von Mehl, Wasser und optional einer oder mehreren anderen Backzutat(en);
b) Teilen des Teiges in einen oder mehrere Teigteile;
c) Bringen des einen oder der mehreren Teigteile in ein oder mehrere geformte Teigstücke;
d) Kontaktieren von 30-70% der gesamten Oberfläche des einen oder der mehreren geformten Teigstücke mit heißem Öl während einer Dauer von mindestens 10 Sekunden, um ein oder mehrere teilweise frittierte Teigstücke mit einer frittierten Oberfläche und einer nicht frittierten Oberfläche zu erzeugen; und
e) Backen des einen oder der mehreren teilweise frittierten Teigstücke, um ein oder mehrere gebackene Teigstücke zu erzeugen;
wobei eine Schicht aus essbarem Material auf 40-70% der Oberfläche der geformten Teigstücke, den teilweise frittierten Teigstücken oder den gebackenen Teigstücken aufgebracht wird und wobei die Oberfläche des finalen Fertigprodukts, die nicht von der Schicht aus essbarem Material bedeckt wird, frittierte Oberfläche ist.

2. Verfahren nach Anspruch 1, wobei die partiell frittierten Teigstücke gebacken werden, indem die Teigstücke einer oder mehreren der folgenden Wärmebehandlungen unterzogen werden:
• Halten der Teigstücke in einem Ofen mit einer Ofentemperatur von mindestens 150°C für 2 Minuten;
• Kontaktieren der Teigstücke mit überhitztem Dampf;
• Beaufschlagen der Teigstücke mit Heißluft;
• Beaufschlagen der Teigstücke mit Infrarotstrahlung mit einer Wellenlänge im Bereich von 0,7-10 µm.

3. Verfahren nach Anspruch 1 oder 2, wobei das heiße Öl eine Temperatur von mindestens 160°C, vorzugsweise von 170-350°C aufweist.

4. Verfahren nach einem der vorangehenden Ansprüche, wobei nicht mehr als 60% der gesamten Oberfläche des einen oder der mehreren geformten Teigstücke mit dem heißen Öl während einer Dauer von mindestens 10 Sekunden kontaktiert wird.

5. Verfahren nach einem der vorangehenden Ansprüche, wobei die Schicht aus essbarem Material in der Form eines Pulvers, einer Flüssigkeit oder einer Paste aufgebracht wird.

6. Verfahren nach einem der vorangehenden Ansprüche, wobei die Schicht aus essbarem Material mindestens 50 Gewichtsprozent eines essbaren Materials enthält, das aus Schokolade, Fruchtzubereitung, Custard, Glasur, Zucker, Fett, Kakao, Milchprotein, Eiweiß, Eigelb und Kombinationen derselben ausgewählt ist.

7. Verfahren nach einem der vorangehenden Ansprüche, wobei das stärkehaltige Fertigprodukt ein Donut ist.

8. Verfahren nach einem der vorangehenden Ansprüche, wobei die frittierte Oberfläche, die von der Schicht aus essbarem Material bedeckt wird, weniger als 30%, vorzugsweise weniger als 20% der gesamten Oberfläche repräsentiert.

9. Verfahren nach einem der vorangehenden Ansprüche, wobei (i) der eine oder die mehreren Teigteile in geformte Teigstücke mit einer abgerundeten Unterseite gebracht werden; (ii) die frittierte Oberfläche die Oberfläche der abgerundeteten Unterseite einschließt; und (iii) während des Backens das eine oder die mehreren teilweise frittierten Teigstücke auf dem abgerundeten Bodenteil ruhen.

10. Fertiglebensmittelprodukt mit einem Körper aus gebackenem stärkehaltigem Teig, wobei 40-70% der Oberfläche des Körpers aus gebackenem Teig mit einer Schicht aus essbarem Material beschichtet sind, wobei die Oberfläche des gebackenen Teigkörpers, die nicht mit der Schicht aus essbarem Material beschichtet ist, frittierte Oberfläche ist, und wobei mindestens 70 Gewichtsprozent der Oberfläche des gebackenen Teigkörpers, die mit der Schicht aus essbarem Material bedeckt ist, nicht frittiert ist.

11. Fertiglebensmittelprodukt nach Anspruch 10, wobei der gebackene Teigkörper einen Fettgehalt von 2-15 Gewichtsprozent aufweist.

12. Fertiglebensmittelprodukt nach Anspruch 10 oder 11, wobei der gebackene Teigkörper ein Gewicht von 10-200 g aufweist und die Schicht aus essbarem Material ein Gewicht von 2-40 g aufweist.

13. Fertiglebensmittelprodukt nach einem der Ansprüche 10-12, wobei das Lebensmittelprodukt ein Donut ist.

14. Fertiglebensmittelprodukt nach einem der Ansprüche 10-13, wobei die Schicht aus essbarem Material eine durchgehende Schicht ist.

15. Fertiglebensmittelprodukt nach einem der Ansprüche 10-14, wobei die Schicht aus essbarem Material mindestens 50 Gewichtsprozent eines essbaren Materials umfasst, das aus Schokolade, Fruchtzubereitung, Custard, Glasur, Fett, Kakao, Milchprotein, Eiweiß, Eigelb und Kombinationen derselben ausgewählt ist.

## Revendications

1. Procédé de préparation d'un produit alimentaire prêt à consommer à base de farine, ledit procédé comprenant les étapes successives suivantes :
a) préparer une pâte à base de farine en mélangeant de la farine, de l'eau et éventuellement un ou plusieurs autres ingrédients de boulangerie ;
b) diviser la pâte en un ou plusieurs morceaux ;
c) façonner le ou les morceaux de pâte pour obtenir un ou plusieurs pâtons façonnés ;
d) mettre 30 à 70 % de la surface totale du ou des pâtons façonnés en contact avec de l'huile chaude pendant une période d'au moins 10 secondes pour obtenir un ou plusieurs pâtons partiellement frits comprenant une surface frite et une surface non frite ; et
e) faire cuire ledit ou lesdits pâtons partiellement frits pour obtenir un ou plusieurs pâtons cuits ;
dans lequel une couche de matière comestible est appliquée sur 40 à 70 % de la surface des pâtons façonnés, des pâtons partiellement frits ou des pâtons cuits et dans lequel la surface du produit prêt à consommer final qui n'est pas recouverte par la couche de matière comestible est surface frite.

2. Procédé selon la revendication 1, dans lequel les pâtons partiellement frits sont cuits par soumission des pâtons à un ou plusieurs des traitements thermiques suivants :
• maintien desdits pâtons dans un four à une température de four d'au moins 150 °C pendant 2 minutes ;
• mise en contact desdits pâtons avec de la vapeur surchauffée ;
• exposition desdits pâtons à un courant d'air chaud ;
• exposition desdits pâtons à des rayons infrarouges ayant une longueur d'onde dans la plage de 0,7 à 10 µm.

3. Procédé selon la revendication 1 ou 2, dans lequel l'huile chaude a une température d'au moins 160 °C, de préférence de 170 à 350 °C.

4. Procédé selon l'une quelconque des revendications précédentes, dans lequel pas plus de 60 % de la surface totale du ou des pâtons façonnés est mise en contact avec l'huile chaude pendant une période d'au moins 10 secondes.

5. Procédé selon l'une quelconque des revendications précédentes, dans lequel la couche de matière comestible est appliquée sous la forme d'une poudre, d'un liquide ou d'une pâte.

6. Procédé selon l'une quelconque des revendications précédentes, dans lequel la couche de matière comestible contient au moins 50 % en poids d'une matière comestible choisie parmi le chocolat, une préparation à base de fruits, la crème anglaise, le glaçage, le sucre, la matière grasse, le cacao, la protéine de lait, le blanc d'oeuf, le jaune d'oeuf, et leurs combinaisons.

7. Procédé selon l'une quelconque des revendications précédentes, dans lequel le produit prêt à consommer à base de farine est un beignet.

8. Procédé selon l'une quelconque des revendications précédentes, dans lequel la surface frite qui est recouverte par la couche de matière comestible représente moins de 30 %, de préférence moins de 20 % de la surface totale.

9. Procédé selon l'une quelconque des revendications précédentes, dans lequel (i) le ou les morceaux de pâte sont façonnés pour obtenir des pâtons façonnés ayant un fond arrondi ; (ii) la surface frite comprend la surface du fond arrondi ; et (iii) lors de la cuisson le ou les pâtons partiellement frits reposent sur leur partie de fond arrondi.

10. Produit alimentaire prêt à consommer comprenant un corps constitué d'une pâte cuite à base de farine, 40 à 70 % de la surface dudit corps pâteux cuit étant revêtue d'une couche de matière comestible, dans lequel la surface du corps pâteux cuit qui n'est pas recouverte par la couche de matière comestible est une surface frite et dans lequel au moins 70 % en poids de la surface du corps pâteux cuit qui est recouverte par la couche de matière comestible est une surface non frite.

11. Produit alimentaire prêt à consommer selon la revendication 10, dans lequel le corps pâteux cuit a une teneur en graisse de 2 à 15 % en poids.

12. Produit alimentaire prêt à consommer selon la revendication 10 ou 11, dans lequel le corps pâteux cuit a un poids de 10 à 200 g et la couche de matière comestible a un poids de 2 à 40 g.

13. Produit alimentaire prêt à consommer selon l'une quelconque des revendications 10 à 12, dans lequel le produit alimentaire est un beignet.

14. Produit alimentaire prêt à consommer selon l'une quelconque des revendications 10 à 13, dans lequel la couche de matière comestible est une couche continue.

15. Produit alimentaire prêt à consommer selon l'une quelconque des revendications 10 à 14, dans lequel la couche de matière comestible comprend au moins 50 % en poids d'une matière comestible choisie parmi le chocolat, une préparation à base de fruits, la crème anglaise, le glaçage, la matière grasse, le cacao, la protéine de lait, le blanc d'oeuf, le jaune d'oeuf, et leurs combinaisons.
